Europäisches Patentamt

European Patent Office

Office européen des brevets

(11) Publication number: 0 645 439 A2

# EUROPEAN PATENT APPLICATION

(21) Application number: 94306971.6

(22) Date of filing: 23.09.94

(51) Int. Cl.6: C09J 133/08, C09J 131/02

(30) Priority: 29.09.93 US 129961
17.12.93 US 169724

(43) Date of publication of application:
29.03.95 Bulletin 95/13

(84) Designated Contracting States:
DE FR GB IT

(71) Applicant: ROHM AND HAAS COMPANY
100 Independence Mall West
Philadelphia,
Pennsylvania 19106-2399 (US)

(72) Inventor: Bricker, Mark Charles
40 Thomas Lane
Gilbertsville,
Pennsylvania 19525 (US)
Inventor: Graziano, Louis Christopher
162 Willow Lane
Doylestown,
Pennsylvania 18901 (US)
Inventor: Kamel, Nader Nassif
1633 Makefield Road
Yardley,
Pennsylvania 19067 (US)

(74) Representative: Smith, Julian Philip Howard et al
Rohm and Haas (UK) Limited,
European Operations Patent Dept.,
Lennig House,
2 Masons Avenue
Croydon CR9 3NB (GB)

(54) Laminating adhesive composition.

(57) An aqueous laminating adhesive composition for wet lamination of substrates to form a laminated article includes 40 weight percent to 65 weight percent solids dispersed in an aqueous medium, wherein the solids include 20 weight percent to 80 weight percent of a polymer having a glass transition temperature from -15° to -40°C and wherein the polymer is selected from the group consisting of acrylic polymers and vinyl ester polymers; 2 to 20 weight percent of a plasticizer compound; and 5 weight percent to 50 weight percent of a tackifier compound.

EP 0 645 439 A2

The present invention is directed to laminating adhesive compositions and, more particularly, to aqueous laminating adhesive compositions for wet lamination of substrates

There is a constant effort in the adhesives art to develop aqueous laminating adhesive compositions for wet lamination of substrates, for example packaging materials, that provide improved adhesion without requiring the addition of volatile organic solvents.

In accordance with the present invention there is provided an aqueous laminating adhesive composition for wet lamination of substrates, comprising: from 40 weight percent to 65 weight percent solids dispersed in an aqueous medium, wherein the solids comprise: from 20 weight percent to 80 weight percent of a polymer having a glass transition temperature from -15°C to -40°C, and wherein the polymer is selected from the group consisting of acrylic polymers and vinyl ester polymers; from 2 to 20 weight percent of a plasticizer compound; and from 5, preferably from 20, weight percent to 50 weight percent of a tackifier compound.

In accordance with the present invention there is also provided a method for making an aqueous laminating adhesive composition, comprising: adding a plasticizer compound and a tackifier compound to an aqueous emulsion of a polymer having a glass transition temperature from -15°C to -40°C to form a mixture thereof; wherein the polymer is selected from the group consisting of acrylic polymers and vinyl ester polymers; and agitating the mixture.

In accordance with the present invention there is further provided a laminated article comprising a first substrate layer, a second substrate layer and an adhesive layer interposed between the first and second substrate layers and bonding the first and second substrate layers together, wherein the adhesive layer comprises the solids defined above; and wherein preferably the first and second substrates are independently selected from the group consisting of polymer films, papers, paperboards, wax-coated papers and wood.

In accordance with the present invention there is also provided a method for making a laminated article wherein two substrate layers are bonded together by a dried layer of adhesive composition, comprising: applying a wet layer of the composition defined above to a first substrate layer; covering the wet layer of adhesive composition with a second substrate layer; and drying the layer of adhesive composition to form the laminated article.

Preferably the polymer is a vinyl ester polymer selected from the group consisting of those vinyl ester homopolymers, vinyl ester/acrylic copolymers, vinyl ester/olefin copolymers.

Preferably the plasticizer compound is selected from the group consisting of dibutyl phthalate, diethylene glycol dibenzoate, dipropylene glycol dibenzoate, esters of $(C_2-C_6)$alcohols with adipic acid or succinic acid.

Preferably the tackifier compound has a melting point between 20°C and 110°C.

Preferably the tackifier compound is selected from the group consisting of abiatic acid rosin, the glycerol and pentaerythritol esters of abiatic acid, isoprene, poly(alpha-methyl styrene), low molecular weight poly(styrene), limonene and pinene. The tackifier is preferably added to the composition in nonaqueous form. The tackifier is more preferably added to the composition as a solution in an organic liquid. The organic liquid is preferably the plasticizer compound.

The polymer is made by polymerizing a mixture of monomers to provide a polymer having repeating units derived from the respective monomers of the mixture. The relative amounts of the monomers of the mixture is selected, according to methods known in the art, so that the polymer produced by polymerizing the monomer mixture exhibits a $T_g$ in the desired range. The $T_g$ values referred to herein are those calculated as a weighted average of the $T_g$ values for homopolymers derived from the respective monomers of the reaction mixture, for example, according to the relationship:

$$Tg(calculated) = w(M_1) \times Tg(M_1) + w(M_2) \times Tg(M_2)$$

wherein:

Tg(calculated) is the glass transition temperature calculated for the copolymer
$w(M_1)$ is the weight fraction of monomer $M_1$ in the copolymer
$w(M_2)$ is the weight fraction of monomer $M_2$ in the copolymer
$Tg(M_1)$ is the glass transition temperature of the homopolymer of $M_1$
$Tg(M_2)$ is the glass transition temperature of the homopolymer of $M_2$.

The glass transition temperature of homopolymers may be found, for example, in "Polymer Handbook", edited by J. Brandrup and E.H. Immergut, Interscience Publishers.

Suitable vinyl ester monomers include, for example, vinyl acetate, vinyl propionate and vinyl versatate and mixture thereof. In a preferred embodiment, the vinyl ester monomer is vinyl acetate.

The repeating units of the acrylic polymers and acrylic portions, that is acrylic repeating units of the vinyl ester/acrylic copolymers and vinyl ester/ethylene/acrylic terpolymers are derived from alkyl (meth)-acrylate monomers. The term "(meth)acrylate" is used herein to refer collectively to alkyl acrylate monomers and alkyl (meth)acrylate monomers. Suitable alkyl (meth)acrylate monomers include, for example, ethyl acrylate, butyl acrylate, 2-ethylhexyl acrylate methyl methacrylate, ethyl methacrylate, butyl methacrylate and lauryl methacrylate. In a preferred embodiment, the alkyl methacrylate monomer is butyl acrylate or 2-ethylhexyl acrylate.

In a preferred embodiment, the acrylic copolymers, the vinyl ester/acrylic copolymers and vinyl ester/ethylene/acrylic terpolymers further include up to about 10 weight percent (wt%) repeating units derived from an ethylenically unsaturated polar monomer. Suitable ethylenically unsaturated polar monomers include, for example, $(C_2-C_6)$hydroxyalkyl (meth)acrylate monomers such as hydroxyethyl acrylate and hydroxypropyl methacrylate, and ethylenically unsaturated carboxylic acid monomers such as acrylic acid, methacrylic acid, itaconic acid, crotonoic acid and fumaric acid.

The olefin portions of the vinyl ester/olefin copolymers and vinyl ester/olefin/acrylic terpolymers are derived from olefin monomers. Suitable olefin monomers include, for example, ethylene and propylene.

In a preferred embodiment, the polymer has a weight average molecular weight, determined, for example, by gel permeation chromatography, of about 100,000 to about 2,000,000.

The copolymer may, optionally, be pre-crosslinked, by including a small amount, for example , about 0.01 wt% to about 5 wt%, of a polyethylenically unsaturated monomer in the monomer mixture. Suitable polyethylenically unsaturated monomers include, for example, allyl (meth)acrylate, diallyl phthalate, 1,4-butylene glycol di(meth)acrylate and mixtures thereof.

The polymer is made, for example, by polymerizing the above described monomer mixture according to known free radical-initiated emulsion polymerization techniques.

The emulsion polymers may be stabilized with conventional colloidal stabilizers, for example, hydroxyethyl cellulose, carboxymethyl cellulose, poly(vinyl alcohol) (PVOH), gum arabic, or with anionic or nonionic surfactants, for example, alkyl sulfonates, alkyl phenol ethoxysulfates, monoalkyl sulfosuccinates.

In a preferred embodiment, the polymer is in the form of an aqueous emulsion wherein about 0.05 wt% to about 10 wt% poly(vinyl alcohol), based on the weight of polymer, is used as a colloidal stabilizer.

The molecular weight of the polymer may, optionally, be controlled in a conventional manner including up to about 10 wt%, more preferably, up to about 0.75 wt%, based on weight of the polymer, of a chain transfer agent, for example, $(C_2-C_{20})$alkyl mercaptans such as octyl mercaptan, dodecyl mercaptan, and esters of mercaptopropionic acid such as methyl-3-mercaptopropionate and butyl-3-mercaptopropionate, in the emulsion polymerization reaction mixture. In a preferred embodiment, the chain transfer agent is dodecyl mercaptan or methyl-3-mercaptopropionate.

In a preferred embodiment, the polymer emulsion is about 30 wt% to about 70 wt%, more preferably about 45 wt% to about 60 wt%, polymer solids.

In a preferred embodiment, the polymer particles of polymer emulsion are about 100 nanometers to about 4000 nanometers in diameter.

In a preferred embodiment, the polymer emulsion has a viscosity of about 200 centiPoise (cP) to about 5000 cP, more preferably about 100 cP to about 5000 cP, measured, for example, using a Brookfield viscometer (Model No. LVT with a #3 spindle at 12 revolutions per minute).

In a preferred embodiment, the laminating adhesive composition of the present invention includes a secondary polymer. Suitable secondary polymers include, for example, elastomeric polymers such as styrene-butadiene resin, natural rubber, acrylic copolymers and vinyl acetate copolymers. In a preferred embodiment, the secondary polymer is styrene-butadiene resin.

The laminating adhesive composition of the present application includes a plasticizer compound. Suitable plasticizer compounds include, for example, phthalates such as dibutyl phthalate, benzoate derivatives such as diethylene glycol dibenzoate, dipropylene glycol dibenzoate, and esters of dicarboxylic acids such as esters of $(C_2-C_6)$alcohols with adipic acid or succinic acid. In a preferred embodiment, the plasticizer is a mixture of diethylene glycol dibenzoate and dipropylene glycol dibenzoate.

The laminating adhesive composition of the present invention includes a tackifier compound. Suitable tackifiers include, for example, rosin acids such as abiatic acid rosin, ester derivatives of rosin acids such as the glycerol and pentaerythritol esters of abiatic acid. Hydrocarbon tackifier compounds, for example, aliphatic tackifier compounds such as isoprene, aromatic tackifier compounds such as poly(alpha-methyl styrene), hydrocarbon monomer tackifier compounds such as low molecular weight poly(styrene) and terpenes such as limonene and pinene, are also suitable tackfier compounds. In a preferred embodiment, the tackifier compound has a melting point (mp) between about 20°C and about 110°C, and, more preferably, between about 60°C and about 85°C.

The aqueous laminating adhesive of the present invention includes about 50 wt% to 65 wt% solids dispersed in water.

The laminating adhesive solids include 20 wt% to 80 wt%, preferably about 40 wt% to about 60 wt%, polymer.

The laminating adhesive solids include up to about 20 wt%, preferably about 2 wt% to about 15 wt%, secondary polymer.

The laminating adhesive solids include 2 wt% to 20 wt%, preferably about 5 wt% to about 15 wt%, plasticizer compound.

The laminating adhesive solids include 5% to 50 wt% tackifier compound. In those embodiments wherein the polymer is a vinyl ester polymer, the laminating adhesives solids preferably include about 20 wt% to 50 wt%, more preferably about 30 wt% to about 40 wt%, tackifier compound.

The laminating adhesive composition may, optionally, further include known additives such as, for example, emulsifiers, pigments, fillers, curing agents, thickeners, humectants, wetting agents, biocides, organosilanes, colorants, waxes and antioxidants.

The laminating adhesive composition is made by adding the plasticizer, tackifier and any other components of the composition to the polymer emulsion and agitating the combination to form a stable emulsion.

In a first embodiment of the laminating adhesive composition, the tackifier is added in the form of an aqueous tackifier dispersion. Suitable aqueous tackifier dispersions are commercially available.

In a preferred embodiment, the tackifier is added in nonaqueous form, that is, tackfiers having a melting point at or below the laminating adhesive batch temperature are added directly to the batch as liquids and tackifiers having a melting point higher than the batch temperature are added to the batch in the form of a solution in an organic liquid. In a highly preferred embodiment of the laminating adhesive tackifiers having a melting point higher than the batch temperature are added to the batch in the form of a solution in the plasticizer. The tackifier is dissolved in the plasticizer by, for example, agitating a mixture of the solid tackifier in a heated volume of the plasticizer.

The laminating adhesive composition is useful for wet lamination of substrates, that is, wherein a layer of the adhesive composition is applied to a first substrate and then the wet adhesive layer is covered with a second substrate and the adhesive layer is then dried to form a laminated article. The adhesive composition of the present invention may be applied to a first substrate by known techniques such as, for example, roll coating, wire-wound rod coating, knife coating, gravure printing and curtain coating.

Under certain application conditions wherein an open reservoir of the adhesive composition is subjected to agitation, for example, by a stream of recycled adhesive composition, some embodiments of the adhesive composition have shown a tendency to form a foam. Adhesive compositions of the present invention wherein the tackifier is added in non-aqueous form offer improved resistance to such foaming.

Suitable substrates include, for example, paper products such as papers and paperboards, wax-coated papers, wood and polymer films.

## Examples 1-9

The following commercially available materials were used to make the laminating adhesive compositions Examples 1-9 and are referred to in the descriptions below. The respective sources of the materials are listed in parentheses following each product name:

Rovace HP 2931 copolymer emulsion (Rohm and Haas Company)-vinyl ester/acrylic copolymer (Tg = -25°C) emulsion;

E-3087 Copolymer Emulsion (Rohm And Haas Company)- acrylic copolymer (Tg = -32C) emulsion;

Escorez 9271 tackifier (Exxon) - aliphatic/aromatic tackifier dispersion;

Escorez 2101 tackifier (Exxon) - aliphatic/aromatic tackifier (mp = 93°C);

Piccolastic A5 tackifier (Hercules) - styrenic tackifier (mp = 20°C) from;

Hercolyn D tackifier (Hercules) - rosin acid ester tackifier (mp = 20°C);

Tacolyn 1070 tackifier (Hercules Incorporated)- aliphatic hydrocarbon resin tackifier dispersion;

Benzoflex 50 plasticizer (Velsicol) - benzoate plasticizer (50/50 blend of diethylene glycol dibenzoate and dipropylene glycol dibenzoate);

RES -6105 copolymer(Rohm and Haas Company) -styrene-butadiene resin (Tg = -60°C ); and

Airflex 465 (Air Products) - PVOH-stabilized vinyl acetate/ethylene copolymer (Tg ~0°C).

4

## Example 1

60 grams of Rovace HP 2931 copolymer emulsion were placed in a beaker. While agitating the mixture, 9.5 grams of RES 6105 were added to the beaker. The pH was raised to a pH of 8.5-9.0 with ammonia. Finally, 6.0 grams of water was added to adjust the viscosity and solids level of the adhesive composition.

## Example 2

60 grams of Rovace 2931 copolymer emulsion were placed in a beaker. While agitating the mixture, 10.58 grams of Benzoflex 50 were added to the beaker. The pH was then raised to a pH of 8.5-9.0 with ammonia. Finally, 6.0 grams of water was added to adjust viscosity and solids.

## Example 3

60 grams of Rovace 2931 copolymer emulsion were placed in a beaker. While agitating the mixture, 2.0 grams of Piccolastic A5, 9.5 grams of RES 6105 and 10.0 grams of Excorez 9271 were added to the beaker. The pH was then raised to a pH of 8.5-9.0 with ammonia. An additional 5.0 grams of Excorez 9271 were added to the mixture. Finally, 6.0 grams of water was added to adjust viscosity and solids.

## Example 4

60 grams of Rovace 2931 copolymer emulsion were placed in a beaker. While agitating the mixture, 2.0 grams of Piccolastic A5, 5.0 grams of Benzoflex 50, 9.5 grams of RES 6105 and 9.5 grams of Excorez 9271 were added to the beaker. The pH was then raised to a pH of 8.5-9.0 with ammonia. An additional 2.5 grams of Benzoflex 50 and 5.0 grams of Excorez 9271 were added to the mixture. Finally, 6.0 grams of water was added to adjust viscosity and solids.

## Example 5

A sample of Rovace HP 2931 copolymer emulsion was placed in a beaker and 20% (tackifier solids on copolymer solids) of Escorez 9271 was added to the beaker using mild agitation from a laboratory mixer.

## Example 6

A sample of Airflex 465 was placed in a beaker and 20% (tackifier solids on copolymer solids) of Escorez 9271 was added to the beaker using mild agitation from a laboratory mixer.

## Examples 7-9

A premix of 12.5 grams Benzoflex 50, 1.6 grams Piccolastic A5, 5.5 grams Hercolyn D, and 8.5 grams Escorez 2101 was prepared by heating the plasticizer in a beaker on a conventional hot plate to 82-87°C (180-190°F). The tackifier resins were then added to the plasticizer. The premix was heated to the point that the tackifiers were melted and mixed such that a clear amber solution was formed.

Example 7 was made by placing of polymer emulsion of Example 1 in a beaker. 12% (tackifier solids on latex solids) of the premix was added to the latex while agitating the mixture.

Example 8 was made by placing Airflex 465 in a beaker. 12% (tackifier solids on latex solids) of the premix was added to the latex while agitating the mixture.

Example 9 was made by placing 55 grams of Rovace HP-2931 in a beaker. 28.1 grams of the premix was added to the latex while agitating the mixture. After the addition of pre-mix, 11.6 grams of RES 9410 latex was added. Finally, 5.3 grams of water was added to adjust viscosity and solids.

## Example 10

The adhesives of Examples 2-5 and 9 were drawn down on a number of polyolefin films with a 38 wire wound rod. A piece of water strength kraft paper was applied, followed by a pass with a five pound roller to firmly press the laminate. The laminates were allowed to dry overnight. The laminates were then peeled apart on a tensile testing apparatus (Instron tensile tester) at a crosshead speed of 10 inches per minute. Observations regarding the failure mode of each of the samples were recorded. Results are set forth below in a Table 1.

Table 1

| Example No. | Adhesion Performance |
|---|---|
| 1 | Strong bond, no fiber tear [178.5 g/cm (1.0 pound per inch (lb/in))], adhesive failure from film |
| 2 | medium-strong bond [133.8g/cm (0.75 lb/in)], cohesive failure |
| 3 | Strong bond [214.2 g/cm (1.2 lb/in)], adhesive failure |
| 4 | Complete fiber tear |
| 9 | Complete fiber tear |

Testing for Foam

A glass jar was tared and then filled to the top with a sample of the adhesive composition of Example 5 weight was noted. The adhesive composition was then poured into the reservoir of a Hobart kitchen mixer along with 100 additional grams of the adhesive composition. The machine was allowed to agitate the adhesive composition for 5 minutes. Foamed adhesive composition was then poured back into the tared jar and weighed. The percent foam was calculated by taking the foam weight divided by the original weight of adhesive composition sample and then subtracted from 100. Results are set forth below in Table 2 as percent foam (%).

Table 2

| Example No.. | Foam(%) |
|---|---|
| 5 | 57.3 |
| 6 | 58.2 |
| 7 | 3.7 |
| 8 | 25.4 |

Examples 11-13

E-3087 acrylic copolymer emulsion was used as the composition of Example 11.

5g Tacolyn 1070 tackifier were added to 100g E 3087 copolymer emulsion in a breaker with stirring to form the composition of Example 12.

5g Tacolyn 1070 tackifier and then 5g Benzoflex plasticizer were added to 100g E 3087 copolymer emulsion in a breaker with stirring to form the composition of Example 13.

Example 14

The peel strength of each the compositions of Examples 11-13 was tested according to the method set forth above in Example 10, except that the tensile testing apparatus was operated at a crosshead speed of 30.48cm/ minute (12 inches per minute). Sample laminates were also pulled by hand to allow observation of the failure mode exhibited by each of the compositions at a relatively high peel rate. Results of the peel testing are set forth below in Table 3 as Peel Strength, expressed as grams per linear cm (pounds per linear inch (lb/in)), and Failure Mode, expressed as weak, zippy adhesive failure (Z), cohesive failure, that it, fiber tear, of the paper substrate (FT) and failure to the polyolefin substrate (SF) observed during hand peeling of each of three sample laminates made from each of the compositions.

Table 3

| Example # | Peel Strength g/cm (lb/in) | Failure Mode |
|-----------|---------------------------|--------------|
| 11 | 133.8(0.75) | 3 Z |
| 12 | 146.4(0.82) | 1 Z; PT; 1 SF |
| 13 | 178.5(1.0) | 3 SF |

The laminating adhesive of the present invention provides improved adhesion. When the tackifier is added in non-aqueous form, it provides improved resistance to foaming.

**Claims**

1. An aqueous laminating adhesive composition for wet lamination of substrates, comprising:
   from 40 weight percent to 65 weight percent solids dispersed in an aqueous medium, wherein the solids comprise:
   from 20 weight percent to 80 weight percent of a polymer having a glass transition temperature from -15°C to -40°C, and wherein the polymer is selected from the group consisting of acrylic polymers and vinyl ester polymers;
   from 2 to 20 weight percent of a plasticizer compound; and
   from 5, preferably from 20, weight percent to 50 weight percent of a tackifier compound.

2. A method for making an aqueous laminating adhesive composition, comprising: adding a plasticizer compound and a tackifier compound to an aqueous emulsion of a polymer having a glass transition temperature from -15°C to -40°C to form a mixture thereof; wherein the polymer is selected from the group consisting of acrylic polymers and vinyl ester polymers; and agitating the mixture.

3. A laminated article comprising a first substrate layer, a second substrate layer and an adhesive layer interposed between the first and second substrate layers and bonding the first and second substrate layers together, wherein the adhesive layer comprises the solids defined in claim 1; and wherein preferably the first and second substrates are independently selected from the group consisting of polymer films, papers, paperboards, wax-coated papers and wood.

4. A method for making a laminated article wherein two substrate layers are bonded together by a dried layer of adhesive composition, comprising: applying a wet layer of the composition defined in claim 1 to a first substrate layer; covering the wet layer of adhesive composition with a second substrate layer; and drying the layer of adhesive composition to form the laminated article.

5. The composition or method of any one of the preceding claims, wherein the polymer is a vinyl ester polymer selected from the group consisting of those vinyl ester homopolymers, vinyl ester/acrylic copolymers, vinyl ester/olefin copolymers.

6. The composition or method of any one of the preceding claims, wherein the plasticizer compound is selected from the group consisting of dibutyl phthalate, diethylene glycol dibenzoate, dipropylene glycol dibenzoate, esters of $(C_2-C_6)$alcohols with adipic acid or succinic acid.

7. The composition or method of any one of the preceding claims, wherein the tackifier compound has a melting point between 20°C and 110°C.

8. The composition or method of any one of the preceding claims, wherein the tackifier compound is selected from the group consisting of abiatic acid rosin, the glycerol and pentaerythritol esters of abiatic acid, isoprene, poly(alphamethyl styrene), low molecular weight poly(styrene), limonene and pinene; wherein the tackifier is preferably added to the composition in nonaqueous form; and wherein the tackifier is more preferably added to the composition as a solution in an organic liquid; and wherein the organic liquid is even more preferably the plasticizer compound.

9. The composition or method of any one of the preceding claims, wherein the tackifier is added to the composition as an aqueous dispersion.

7

**10.** A laminated article produced by the method of any one of claims 2, 4 or 5-9.